# EUROPÄISCHE PATENTSCHRIFT

(11) **EP 1 835 718 B1**
(45) Veröffentlichungstag und Bekanntmachung des Hinweises auf die Patenterteilung: **03.02.2010**
(21) Anmeldenummer: 07103933.3
(22) Anmeldetag: 12.03.2007
(51) Int. Cl.: H04N 1/32, G06T 1/00

(54) **Robustes digitales Wasserzeichen für Vektorschriften**
Robust digital watermark for vector fonts
Filigrane numérique résistant pour écritures vectorielles

(30) Priorität: 13.03.2006 EP 06111023
(43) Veröffentlichungstag der Anmeldung: 19.09.2007
(73) Patentinhaber: Fraunhofer-Gesellschaft zur Förderung der angewandten Forschung e.V., 80686 München (DE)
(72) Erfinder: Steinebach, Martin, 64859, Eppertshausen (DE); Thiemert, Stefan, 64287, Darmstadt (DE); Wolf, Patrick, 64569, Nauheim (DE)
(74) Vertreter: Hilleringmann, Jochen

(56) Entgegenhaltungen:
- EP-A- 0 629 972
- US-A1- 2004 001 606
- PATENT ABSTRACTS OF JAPAN Bd. 2000, Nr. 20, 10. Juli 2001 (2001-07-10) -& JP 2001 078006 A (INTERNATL BUSINESS MACH CORP <IBM>), 23. März 2001 (2001-03-23) -& US 6 983 056 B1 (TOMIO AMANO) 3. Januar 2006 (2006-01-03)
- JACK T BRASSIL ET AL: "Copyright Protection for the Electronic Distribution of Text Documents" PROCEEDINGS OF THE IEEE, IEEE. NEW YORK, US, Bd. 87, Nr. 7, Juli 1999 (1999-07), Seiten 1181-1196, XP011044225 ISSN: 0018-9219
- PODILCHUK C I ET AL: "DIGITAL WATERMARKING: ALGORITHMS AND APPLICATIONS" IEEE SIGNAL PROCESSING MAGAZINE, IEEE SERVICE CENTER, PISCATAWAY, NJ, US, Bd. 18, Nr. 4, Juli 2001 (2001-07), Seiten 33-46, XP001059897 ISSN: 1053-5888
- BRASSIL J T ET AL: "Marking text features of document images to deter illicit dissemination" PATTERN RECOGNITION, 1994. VOL. 2 - CONFERENCE B: COMPUTER VISION & IMAGE PROCESSING., PROCEEDINGS OF THE 12TH IAPR INTERNATIONAL. CONFERENCE ON JERUSALEM, ISRAEL 9-13 OCT. 1994, LOS ALAMITOS, CA, USA,IEEE COMPUT. SOC, Bd. 2, 9. Oktober 1994 (1994-10-09), Seiten 315-319, XP010216301 ISBN: 0-8186-6270-0
- BERGHEL H ET AL: "PROTECTING OWNERSHIP RIGHTS THROUGH DIGITAL WATERMARKING" COMPUTER, IEEE SERVICE CENTER, LOS ALAMITOS, CA, US, Bd. 29, Nr. 7, 1. Juli 1996 (1996-07-01), Seiten 101-103, XP000613936 ISSN: 0018-9162

## Beschreibung

### Technisches Anwendungsgebiet

Die Erfindung betrifft ein Verfahren zum robusten und transparenten Einbetten von Informationen (Wasserzeichen) in Vektorschriften.

### Stand der Technik, Nachteile der Technik

Digitale Wasserzeichen können zur Markierung von digitalen Medien eingesetzt werden. Diese Markierung kann unter anderem dazu beitragen, Personen von der Verbreitung illegaler Kopien abzuschrecken oder den Urheber eines Mediendokuments zu identifizieren. Wasserzeichen für Vektorschriften können unter anderem für das Markieren von PostScript, TrueType-Fonts und Open-Type-Fonts eingesetzt werden.

Derzeit existieren keine Verfahren, die speziell für Vektorschriften entwickelt worden sind. Wasserzeichenverfahren für Vektorgrafiken können in zwei Arten unterteilt werden:
- Einfügen von zusätzlichen Punkten
- Verschieben von Punkten

Ein Beispiel für das Einfügen von zusätzlichen Punkten als Wasserzeichen wird in [1] aufgezeigt. Hierbei wird eine Linie in Segmente unterteilt. Jedes Segment repräsentiert dabei ein Byte (8 Bit). Innerhalb eines Segments wird an den Positionen ein neuer Punkt eingefügt, an deren entsprechenden Positionen im Byte das jeweilige Bit auf 1 gesetzt ist. Der Ansatz, ein Wasserzeichen mit Hilfe zusätzlicher Punkte einzufügen ist auf Vektorschriften nicht anwendbar. Die eingefügten Punkte würden durch marktübliche Schriftentools entfernt.

Die zweite Art von Wasserzeichen beschäftigt sich mit dem Verschieben einzelner Punkte einer Vektorgrafik. Ein Beispiel für ein solches Verfahren wird in [2] vorgestellt. Hierbei werden Vektorpunkte in Relation zu einer definierten Trennlinie verschoben um die Bits einzubringen. Es ist bei solchen Verfahren jedoch festzustellen, dass die Veränderungen, die durch das Wasserzeichen verursacht werden, die Qualität des Materials sehr stark beeinträchtigen können. Insbesondere ist es bei Vektorschriften kritisch, dass gerade Linien durch das Wasserzeichen schräg werden können, wodurch sich die visuelle Qualität stark verschlechtert.

Einen interessanten Ansatz stellt das in [3] vorgestellte Wasserzeichenverfahren für Dokumente dar. Hierbei wird durch Veränderung des Abstandes zwischen Zeichen bzw. Wörtern die Nachricht eingebracht. Dieser Ansatz könnte grundsätzlich auch für die vorliegenden Fonts verwendet werden. Es ist jedoch davon auszugehen, dass eine Veränderung am Font (z.B. eine Skalierung) starke Auswirkungen auf die geänderten Abstände zwischen den Zeichen haben wird. Dies beeinflusst die Auslesbarkeit des Wasserzeichens erheblich. Daher ist dieser Ansatz aufgrund mangelnder Robustheit ungeeignet für den Einsatz im vorliegenden Szenario.

Aus PATENT ABSTRACTS OF JAPAN Bd. 2000, Nr. 20, 10. Juli 2001 (2001-07-10) und JP 2001 078006 A sowie US-B-6 983 056 ist ein Verfahren zum Einbetten von binärer Wasserzeicheninformation in ein Schriftzeichen enthaltendes Schwarz-Weiß-Dokument bekannt, bei dem die Wasserzeicheninformation durch eine Verstärkung oder Abschwächung bestimmter Teilbereiche von Linien der Schriftzeichen eingebettet wird.

### Aufgabe

Aufgabe der Erfindung ist die Schaffung eines Verfahrens zum Einbetten von binären Wasserzeichen in Vektorschriftzeichen, wobei die eingebettete Information robust und transparent ist.

### Mit der Erfindung gelöste Aufgabe

Zur Lösung dieser Aufgabe wird ein Verfahren zum Einbetten von binärer Wasserzeicheninformation in Vektorschriftzeichen vorgeschlagen, die unter anderem durch Linien definiert sind, welche jeweils eine Breite aufweisen, wobei die Linien der Vektorschriftzeichen in Linienbreitengruppen unterschiedlicher, jeweils durch einen unteren und einen oberen Grenzwert definierter Breitenbereiche unterteilt sind, wobei das Verfahren die folgenden Schritte umfasst:
a) zufälliges oder pseudozufälliges Auswählen von zwei Linien eines Vektorschriftzeichens oder je einer Linie zweier Vektorschriftzeichen mit zu einer gemeinsamen Linienbreitengruppe gehörenden Breiten,
b) Definieren der einen Linie als erste Linie und der anderen Linie als zweite Linie, und
c) Verändern des Breitenverhältnisses der beiden Linien derart, dass die erste Linie breiter ist als die zweite Linie und beide Linien jeweils eine Breite aufweisen, die innerhalb des Breitenbereichs der Linienbreitengruppe liegt, wodurch eine erste binäre Wasserzeicheninformation in das bzw. in die Vektorschriftzeichen eingebettet wird oder
d) Verändern des Breitenverhältnisses der beiden Linien derart, dass die erste Linie schmaler ist als die zweite Linie und beide Linien jeweils eine Breite aufweisen die innerhalb des Breitenbereichs der Linienbreitengruppe liegt, wodurch eine zweite binäre Wasserzeicheninformation in das bzw. in die Vektorschriftzeichen eingebettet wird.

Nach der Erfindung werden die Linien der Zeichen eines Vektorschriftzeichensatzes in Abhängigkeit von ihren Breiten unterschiedlichen Linienbreitengruppen zugeordnet. Jede Gruppe ist dabei durch einen unteren und einen oberen Grenzwert definiert, umfasst also einen bestimmten Breitenbereich. Das Breitenverhältnis zweier Linien, die innerhalb eines Vektorschriftzeichens oder innerhalb eines Paares von Vektorschriftzeichen vorhanden sein können, wird nun untersucht bzw. bewusst verändert, um eine binäre Wasserzeicheninformation einzubetten. Von den beiden ausgewählten Linien, die einer Linienbreitengruppe zugeordnet sein müssen, wird nun die eine Linie als erste Linie und die andere Linie als zweite Linie definiert. Sind beide Linien gleich breit, so kann eine erste binäre Wasserzeicheninformation dadurch eingebettet werden, dass das Breitenverhältnis derart verändert wird, dass die erste Linie breiter ist als die zweite Linie, wobei als Randbedingung gilt, dass die Breiten beider Linien innerhalb des Breitenbereichs der Linienbreitengruppe liegen. Soll die zweite binäre Wasserzeicheninformation eingebettet werden, so ist das Breitenverhältnis der beiden Linien derart zu ändern, dass die erste Linie schmaler als die zweite Linie ist. Auch hier gilt wiederum, dass nach der Veränderung der Breite bzw. der Breiten beide Linien eine Breite aufweisen müssen, die innerhalb des Breitenbereichs der Linienbreitengruppe, zu der die beiden Linien gehören, liegen.

Die Veränderung des Breitenverhältnisses der beiden Linien kann durch Verändern lediglich einer der beiden Linien aber auch durch (gegensinniges) Verändern der Breiten der beiden Linien erfolgen. So kann beispielsweise zur Einbettung der ersten binären Wasserzeicheninformation die erste Linie verbreitert werden oder aber die Breite der zweiten Linie verringert werden oder aber sowohl die Breite der ersten Linie vergrößert als auch die Breite der zweiten Linie verkleinert werden. Entsprechendes gilt für die Einbettung der zweiten binären Wasserzeicheninformation.

Sofern das Breitenverhältnis der beiden Linien ohne die erfindungsgemäß vorgesehene Veränderung bereits derart ist, wie es zur Einbettung der ersten bzw. der zweiten binären Wasserzeicheninformation erforderlich ist, bleiben die Linienbreiten unverändert, um die erste bzw. die zweite binäre Wasserzeicheninformation einzubetten.

In der zuvor beschriebenen Weise werden nun mehrere Paare von Vektorschriftzeichenlinien untersucht bzw. verändert, um ein digitales Mehrbit-Wasserzeichen einzubetten.

Mit der Erfindung wird ein Verfahren vorgestellt, welches binäre Informationen in Vektorschriften einbringt. Das Wasserzeichen ist sehr robust gegenüber Skalierung der Vektorschriften und gegenüber einer Umwandlung in ein anderes Vektorschriftenformat. Darüber hinaus sind die Veränderungen nicht wahrnehmbar.

### Grundzüge des Lösungsweges

Das erfindungsgemäße Verfahren für Vektorschriften beeinflusst minimal die Symmetrie innerhalb von Vektorzeichen. Zusätzlich werden Querverbindungen zwischen den Linienbreiten von verschiedenen Zeichen hergestellt. Es handelt sich um ein blindes Verfahren, d.h. der Original-Font muss zum Auslesen des Wasserzeichens nicht herangezogen werden. Eine Nachricht wird in folgenden Schritten eingebettet.

### Identifizierung von Linienpaaren

Es müssen im Zeichensatz Linienpaare identifiziert werden, die zum Einbetten von Bits geeignet sind. Die Linienbreiten müssen dabei nahezu identisch sein, d.h. innerhalb einer Linienbreitengruppe liegen. Beispielsweise ist die Breite der Längslinien der Zeichen "E" und "F" üblicherweise nahezu identisch. Die Linienpaare können durch drei verschiedene Methoden identifiziert werden:
- Manuell: Die Linien und Punkte, die die Linien beschreiben, werden manuell detektiert
- Semi-Automatisch: Ein Algorithmus schlägt Linienpaare und deren entsprechenden Punkte vor und erwartet eine Bestätigung vom Benutzer
- Automatisch: Ein Algorithmus legt automatisch Linienpaare und die zu verschiebenden Punkte fest

### Einbetten der Nachricht

Zum Einbetten der Nachricht muss anhand eines geheimen Schlüssels festgelegt werden, welches Linienpaar bzw. Zeichen mit welchem Bit markiert wird. Der Einsatz des Schlüssels ist vorteilhaft, um Schutz vor gezielten Manipulationen der Nachricht zu bieten. Für jedes Linienpaar muss eine Regel aufgestellt werden, nach der ein Bit der Nachricht eingebettet werden soll. Soll beispielsweise ein Bit in die Längslinien der Zeichen "E" und "F" eingebettet werden, so kann die Regel lauten:

Ist die Längslinie von "E" breiter als die Längslinie von "F", so repräsentiert dieses Verhältnis eine eingebettete 1, sonst eine 0.

Sind die Breiten der Längslinien im Original-Font identisch, so muss entweder "E" (Längslinie breiter) oder "F" (Längslinie schmaler) verändert werden. Das Verschieben der Punkte ist abhängig von der gewünschten Robustheit des Wasserzeichens. Je stärker die Veränderung ist, desto robuster wird das Wasserzeichen. Dabei wird jedoch die Veränderung sichtbarer. Die Breite der veränderten Linie ist derart gewählt, dass sie innerhalb der Linienbreitengruppe liegt, zu der die Linie eigentlich gehört.

### Auslesen der Nachricht

Im Ausleseprozess müssen die Linienpaare bzw. Zeichen identifiziert werden in denen das Wasserzeichen eingebracht wurde. Anschließend wird für jede Markierung das Verhältnis der Breiten untersucht. Dazu werden die Regeln verwendet, die bereits im Einbettungsprozess angewandt wurden. Für das Beispiel der Zeichen "E" und "F" wird folgende Regel verwendet:
Ist die Längslinie von "E" breiter als die Längslinie von "F", so wurde eine 1 eingebettet, sonst eine 0.

### Erkennen von Fehlern

Um zu verhindern, dass die Nachricht falsch ausgelesen wird, ist es notwendig Mechanismen einzubinden, die Fehler in der ausgelesenen Nachricht erkennen können. Zum Erkennen erscheinen zwei Mechanismen als geeignet:
- CRC-Prüfsummen: Mit dem Cyclic Redundancy Check (CRC) [4] können zufällige Veränderungen festgestellt werden. Er bietet jedoch keine Sicherheit gegenüber absichtlichen Veränderungen am Material, da sehr einfach zu einem gegebenen CRC-Rest ein Datenblock generiert werden kann, der sich vom Originaldatenblock unterscheidet. Er bietet lediglich eine Möglichkeit, unbeabsichtigte Ubertragungsfehler während einer Kommunikation zu erkennen, Die Einführung von Verschlusselungsmechanismen kann Schutz gegenüber beabsichtigten Manipulationen bieten.
- Fehlerkorrigierende Codes bieten die Möglichkeit aufgrund von Prüfsummen Fehler in binären Daten zu erkennen und deren Originalzustand wiederherzustellen. Als Beispiel sei der BCH-Code [5] genannt.

Das Verfahren bettet also einen binären Vektor, der eine beliebige Nachricht repräsentiert, in folgender Weise in eine Vektorschrift ein:
1. Zunächst werden aus einem Zeichensatz einer Vektorschrift zur Markierung geeignete Linienpaare (lᵢ, lⱼ) ermittelt. Ein Linienpaar (lᵢ, lⱼ) gilt als geeignet, wenn die Breite beider Linien nahezu identisch, d.h. zu einer gemeinsamen Linienbreitengruppe gehören.
2. Für ein Bit des binären Vektors wird pseudozufällig ein Linienpaar (lᵢ, lⱼ) ausgewählt.
3. Soll eine "0" in das Linienpaar (lᵢ, lⱼ) eingebettet werden, so muss die Linie lᵢ breiter als lⱼ sein. Soll eine "1" eingebettet werden, so muss die Linie lᵢ, schmaler als lⱼ sein. Um dieses Verhältnis herzustellen, werden die Breiten der Linien lᵢ, und lⱼ verändert.

Der binäre Vektor wird aus der Vektorschrift folgendermaßen ausgelesen:
1. Zunächst werden aus einem Zeichensatz einer Vektorschrift die Linienpaare (lᵢ, lⱼ) ermittelt, die im Einbettungsprozess als zur Markierung geeignet ermittelt wurden.
2. Es werden pseudozufällig die Linienpaare (lᵢ, lⱼ) ausgewählt, die im Einbettungsprozess markiert worden sind.
3. Ist die Linie lᵢ breiter als lⱼ, so wird aus dem Linienpaar eine "0" ausgelesen. Andernfalls wird eine "1" ausgelesen.

### Erzeugte Verbesserungen und Vorteile gegenüber dem Stand der Technik

Das erfindungsgemäße Verfahren bietet die folgenden Vorteile:
1. Das Wasserzeichen verfügt über eine sehr gute Transparenz.
2. Das Wasserzeichen kann eine sehr große Menge an Informationen in das Datenmaterial einbringen.
3. Das Verfahren ist sehr robust gegenüber Skalierung und Transformation in andere Vektorschriftenformate.
4. Der Ansatz ist auf verschiedene Vektorschriftenformate anwendbar.

Die Erfindung wurde vorstehend anhand der Variation bzw. Beibehaltung der Breiten der Linien von Vektorschriftzeichen erläutert. Die obige Aufgabe wird aber ebenso gelöst, wenn anstelle der Breiten die Längen zweier Linien betrachtet werden.

Zur Erfindung zählt also auch ein Verfahren zum Einbetten von binärer Wasserzeicheninformation in Vektorschriftzeichen, die unter anderem durch Linien definiert sind, welche jeweils eine Länge aufweisen, wobei die Linien der Vektorschriftzeichen in Linienlängengruppen unterschiedlicher, jeweils durch einen unteren und einen oberen Grenzwert definierter Längenbereiche unterteilt sind, mit den folgenden Schritten:
a) zufälliges oder pseudozufälliges Auswählen von zwei Linien eines Vektorschriftzeichens oder je einer Linie zweier Vektorschriftzeichen mit zu einer gemeinsamen Linienlängengruppe gehörenden Längen,
b) Definieren der einen Linie als erste Linie und der anderen Linie als zweite Linie, und
c) Verändern des Längenverhältnisses der beiden Linien derart, dass die erste Linie länger ist als die zweite Linie und beide Linien jeweils eine Länge aufweisen, die innerhalb des Längenbereichs der Linienlängengruppe liegt, wodurch eine erste binäre Wasserzeicheninformation in das bzw. in die Vektorschriftzeichen eingebettet wird oder
d) Verändern des Längenverhältnisses der beiden Linien derart, dass die erste Linie kürzer ist als die zweite Linie und beide Linien jeweils eine Länge aufweisen, die innerhalb des Längenbereichs der Linienlängengruppe liegt, wodurch eine zweite binäre Wasserzeicheninformation in das bzw. in die Vektorschriftzeichen eingebettet wird.

Die obigen Ausführungen im Zusammenhang mit der "Breiten-Variante" der Erfindung gelten ganz entsprechend auch für die "Längen-Variante".

Schließlich ist es auch möglich, beide zuvor genannten Verfahren zu kombinieren, um sowohl die Breitenvariationen als auch die Längenvariationen der Linien zur Erzielung einer besonders hohen Einbettungsdichte zu nutzen (siehe Ansprüche 7 bis 11).

### Ausführungsbeispiele

Die Erfindung wird nachfolgend anhand der Zeichnung näher erläutert; im Einzelnen zeigen dabei:
- Fig. 1: den Einbettungsprozess, bei dem aus einem Zeichensatz Linienpaare gebildet werden, wobei an einem Linienpaar exemplarisch die Einbettung einer binären "0" und einer binären "1" demonstriert wird,
- Fig. 2: den Ausleseprozess, bei dem aus einem Zeichensatz Linienpaare gebildet werden, wobei an einem Linienpaar exemplarisch das Auslesen einer binären "0" demonstriert wird,
- Fign. 3 und 4: zwei weitere Beispiele für ein erfindungsgemäß markiertes Zeichen bzw. Zeicbenpaar.

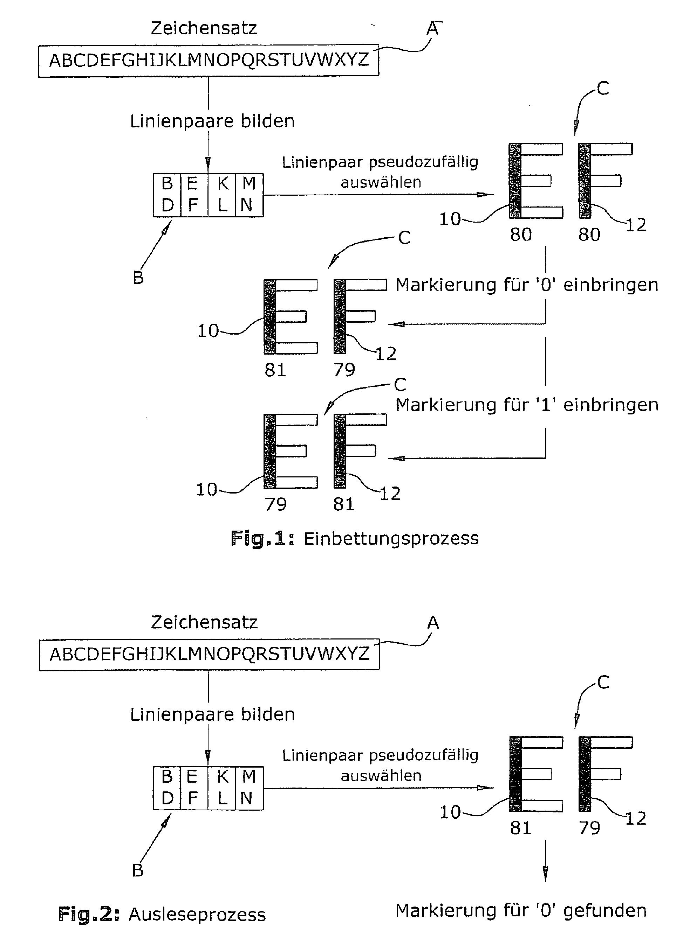

Es soll ein binärer Vektor in eine TrueType-Vektorschrift als Wasserzeichen eingebettet werden (siehe Fig. 1).
1. Die einzubringenden Informationen werden in einen binären Vektor umgewandelt. Der Schlüssel für das Wasserzeichenverfahren und die Länge des Wasserzeichens (in Bit) werden festgelegt.
2. Eine zu markierende Datei wird ausgewählt.
3. Der Wasserzeichenalgorithmus wird mit der einzubringenden Information, dem Schlüssel und der zu markierenden Datei initialisiert.
4. Aus dem Zeichensatz A der Vektorschriftart werden Linienpaare C gebildet, die zur Markierung geeignet sind.
5. Für das Einbetten eines Bits wird mit Hilfe des Schlüssels ein Linienpaar C pseudozufällig ausgewählt. In diesem Beispiel wird die Längslinie 10 des Zeichens "E" und die Längslinie 12 des Zeichens "F" als Linienpaar C ausgewählt. Beide Linien sind in diesem Ausführungsbeispiel gleich breit (z.B. 80 Längeneinheiten).
6. Soll eine "0" in die Gruppe eingebettet werden, so muss die Längslinie 10 von "E" breiter als die Längslinie 12 von "F" sein, z.B. wird die Breite der Längslinie 10 von "E" auf 81 Längeneinheiten vergrößert; optional ist es möglich, gleichzeitig die Breite der Längslinie 12 von "F" auf 79 Längeneinheiten zu verringern. Soll eine "1" in die Gruppe eingebettet werden, so muss die Längslinie 10 von "E" schmaler als die Längslinie 12 von "F" sein, z.B. wird die Breite der Längslinie 10 von "E" auf 79 Längeneinheiten verringert; optional ist es möglich, gleichzeitig die Breite der Längslinie 12 von "F" auf 81 zu vergrößern.
7. Die Schritte 5 und 6 werden wiederholt, bis alle Bits des einzubettenden Vektors in die Vektorschrift eingebracht worden sind.

Das Auslesen des binären Vektors läuft wie folgt ab (siehe Fig. 2):
1. Der Schlüssel für das Wasserzeichenverfahren wird festgelegt. Er muss identisch zu dem im Einbettungsverfahren verwendeten Schlüssel sein.
2. Die markierte Datei wird ausgewählt.
3. Der Wasserzeichenalgorithmus wird mit dem Schlüssel und der markierten Datei initialisiert.
4. Mit dem gleichen Verfahren, wie im Einbettungsprozess, werden aus dem Zeichensatz A der Vektorschriftart die Linienpaare C gebildet.
5. Für ein auszulesendes Bit wird mit Hilfe des Schlüssels ein Linienpaar C pseudozufällig ausgewählt. In diesem Beispiel wird die Längslinie 10 des Zeichens "E" und die Längslinie 12 des Zeichens "F" als Linienpaar C ausgewählt.
6. Ist die Längslinie 10 von "E" breiter als die Längslinie 12 von "F", so wird eine "0" aus dem Linienpaar ausgelesen. Andernfalls wird eine "1" ausgelesen.
7. Die Schritte 5 und 6 werden wiederholt, bis alle eingebetteten Bits ausgelesen wurden.

Die folgenden zwei weiteren Beispiele demonstrieren, wie einzelne Zeichen bzw. Zeichenpaare erfindungsgemäß markiert werden können.

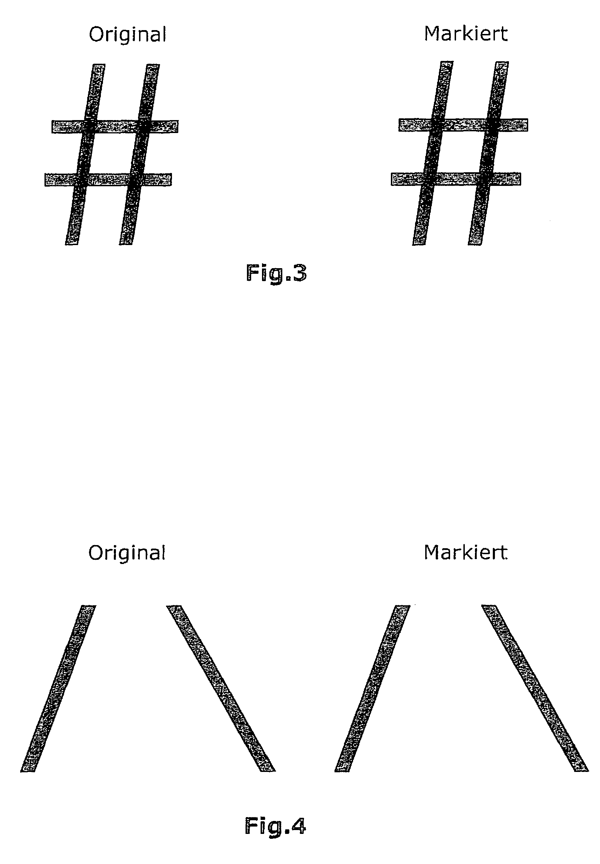

### 1. Das Zeichen "#" (siehe Fig. 3)

1. Regel: Wenn die rechte Längslinie breiter als die linke ist, so wurde eine 1 eingebettet, sonst eine 0.
2. Regel: Wenn die obere Querlinie breiter als die untere ist, so wurde eine 1 eingebettet, sonst eine 0.
3. Regel: Wenn die untere Querlinie länger als die obere ist, so wurde eine 1 eingebettet, sonst eine 0.

### 2. Die Zeichen "/" und "\" (siehe Fig. 4)

Regel: Wenn "/" breiter als "\" ist, so wurde eine 1 eingebettet, sonst eine 0.

### Literatur

[1] Henry Sonnet, Tobias Isenberg, Jana Dittmann, Thomas Strothotte: "Illustration Watermarks for Vector Graphics", 11th Pacific Conference on Computer Graphics and Applications (PG'03) October 08 - 10, Canmore, Canada, 2003
[2] Michael Voigt, Christoph Busch: "Feature-based watermarking of 2D-Vector Data", Security and Watermarking of Multimedia Contents V, SPIE's and IS&T's Electronic Imaging 2003, Santa Clara, USA, 2004
[3] Jack Brassil, Larry O'Gorman: "Watermarking Document Images with Bounding Box Expansion", Information hiding: First International Workshop, Cambridge, UK, 1996
[4] A. Tanenbaum: Computer Networks. Prentice Hall PTR, ISBN: 0-13038-488-7, 2002
[5] Robert M. Gray: "Entropy and Information Theory", Springer-Verlag, 2000

## Patentansprüche

1. Verfahren zum Einbetten von binärer Wasserzeicheninformation in Vektorschriftzeichen, die unter anderem durch Linien definiert sind, welche jeweils eine Breite aufweisen, wobei die Linien der Vektorschriftzeichen in Linienbreitengruppen unterschiedlicher, jeweils durch einen unteren und einen oberen Grenzwert definierter Breitenbereiche unterteilt sind, mit den folgenden Schritten:
a) zufälliges oder pseudozufälliges Auswählen von zwei Linien (10,12) eines Vektorschriftzeichens oder je einer Linie zweier Vektorschriftzeichen mit zu einer gemeinsamen Linienbreitengruppe gehörenden Breiten,
b) Definieren der einen Linie als erste Linie (10) und der anderen Linie als zweite Linie (12), und
c) Verändern des Breitenverhältnisses der beiden Linien derart, dass die erste Linie (10) breiter ist als die zweite Linie (12) und beide Linien (10,12) jeweils eine Breite aufweisen, die innerhalb des Breitenbereichs der Linienbreitengruppe liegt, wodurch eine erste binäre Wasserzeicheninformation in das bzw. in die Vektorschriftzeichen eingebettet wird, oder
d) Verändern des Breitenverhältnisses der beiden Linien (10,12) derart, dass die erste Linie (10) schmaler ist als die zweite Linie (12) und beide Linien (10,12) jeweils eine Breite aufweisen die innerhalb des Breitenbereichs der Linienbreitengruppe liegt, wodurch eine zweite binäre Wasserzeicheninformation in das bzw. in die Vektorschriftzeichen eingebettet wird.

2. Verfahren nach Anspruch 1, **dadurch gekennzeichnet, dass** zur Einbettung der ersten Wasserzeicheninformation die Breiten der beiden Linien (10,12) unverändert bleiben, wenn die erste Linie (10) breiter ist als die zweite Linie (12), und dass zur Einbettung der zweiten Wasserzeicheninformation die Breiten der beiden Linien (10,12) unverändert bleiben, wenn die erste Linie (10) schmaler ist als die zweite Linie (12).

3. Verfahren nach Anspruch 1, **dadurch gekennzeichnet, dass** zur Einbettung der ersten Wasserzeicheninformation die Veränderung des Breitenverhältnisses der beiden Linien (10,12) durch Vergrößern der Breite der ersten Linie (10) und/oder durch Verkleinern der Breite der zweiten Linie (12) erfolgt und dass zur Einbettung der zweiten Wasserzeicheninformation die Veränderung der Breite der beiden Linien (10,12) durch Verkleinern der Breite der ersten Linien (10) und/oder durch Vergrößern der Breite der zweiten Linie (12) erfolgt.

4. Verfahren zum Einbetten von binärer Wasserzeicheninformation in Vektorschriftzeichen, die unter anderem durch Linien definiert sind, welche jeweils eine Länge aufweisen, wobei die Linien der Vektorschriftzeichen in Linienlängengruppen unterschiedlicher, jeweils durch einen unteren und einen oberen Grenzwert definierter Längenbereiche unterteilt sind, mit den folgenden Schritten:
a) zufälliges oder pseudozufälliges Auswählen von zwei Linien (10,12) eines Vektorschriftzeichens oder je einer Linie zweier Vektorschriftzeichen mit zu einer gemeinsamen Linienlängengruppe gehörenden Längen,
b) Definieren der einen Linie als erste Linie (10) und der anderen Linie als zweite Linie (12), und
c) Verändern des Längenverhältnisses der beiden Linien derart, dass die erste Linie (10) länger ist als die zweite Linie (12) und beide Linien (10,12) jeweils eine Länge aufweisen, die innerhalb des Längenbereichs der Linienlängengruppe liegt, wodurch eine erste binäre Wasserzeicheninformation in das bzw. in die Vektorschriftzeichen eingebettet wird, oder
d) Verändern des Längenverhältnisses der beiden Linien (10,12) derart, dass die erste Linie (10) kürzer ist als die zweite Linie (12) und beide Linien (10,12) jeweils eine Länge aufweisen, die innerhalb des Längenbereichs der Linienlängengruppe liegt, wodurch eine zweite binäre Wasserzeicheninformation in das bzw. in die Vektorschriftzeichen eingebettet wird.

5. Verfahren nach Anspruch 4, **dadurch gekennzeichnet, dass** zur Einbettung der ersten Wasserzeicheninformation die Längen der beiden Linien (10,12) unverändert bleiben, wenn die erste Linie (10) länger ist als die zweite Linie (12), und dass zur Einbettung der zweiten Wasserzeicheninformation die Längen der beiden Linien (10,12) unverändert bleiben, wenn die erste Linie (10) kürzer ist als die zweite Linie (12).

6. Verfahren nach Anspruch 4, **dadurch gekennzeichnet, dass** zur Einbettung der ersten Wasserzeicheninformation die Veränderung des Längenverhältnisses der beiden Linien (10,12) durch Vergrößern der Länge der ersten Linie (10) und/oder durch Verkleinern der Länge der zweiten Linie (12) erfolgt und dass zur Einbettung der zweiten Wasserzeicheninformation die Veränderung der Länge der beiden Linien (10,12) durch Verkleinern der Länge der ersten Linien (10) und/oder durch Vergrößern der Länge der zweiten Linie (12) erfolgt.

7. Verfahren zum Einbetten von binärer Wasserzeicheninformation in Vektorschriftzeichen, die unter anderem durch Linien definiert sind, welche jeweils eine Breite aufweisen, wobei die Linien der Vektorschriftzeichen in Linienbreitengruppen unterschiedlicher, jeweils durch einen unteren und einen oberen Grenzwert definierter Breitenbereiche und in Linienlängengruppen unterschiedlicher, jeweils durch einen unteren und einen oberen Grenzwert definierten Längenbereiche unterteilt sind, mit den folgenden Schritten:
a) zufälliges oder pseudozufälliges Auswählen von zwei Linien (10,12) eines Vektorschriftzeichens oder je einer Linie zweier Vektorschriftzeichen mit zu einer gemeinsamen Linienbreitengruppe gehörenden Breiten,
b) Definieren der einen Linie als erste Linie (10) und der anderen Linie als zweite Linie (12),
c) Verändern des Breitenverhältnisses der beiden Linien (10,12) derart, dass die erste Linie (10) breiter ist als die zweite Linie (12) und beide Linien (10,12) jeweils eine Breite aufweisen, die innerhalb des Breitenbereichs der Linienbreitengruppe liegt, wodurch eine erste binäre Wasserzeicheninformation in das bzw. in die Vektorschriftzeichen eingebettet wird, oder
d) Verändern des Breitenverhältnisses der beiden Linien (10,12) derart, dass die erste Linie (10) schmaler ist als die zweite Linie (12) und beide Linien (10,12) jeweils eine Breite aufweisen die innerhalb des Breitenbereichs der Linienbreitengruppe liegt, wodurch eine zweite binäre Wasserzeicheninformation in das bzw. in die Vektorschriftzeichen eingebettet wird,
e) zufälliges oder pseudozufälliges Auswählen von zwei Linien (10,12) eines Vektorschriftzeichens oder je einer Linie zweier Vektorschriftzeichen mit zu einer gemeinsamen Linienlängengruppe gehörenden Längen, wobei die Breitenverhältnisse der beiden Linien entsprechend Schritt c) oder d) verändert sind,
f) Definieren der einen Linie nach Schritt e) als erste Linie (10) und der anderen Linie nach Schritt e) als zweite Linie (12), und
g) Verändern des Längenverhältnisses der beiden Linien (10,12) derart, dass die erste Linie (10) länger ist als die zweite Linie (12) und beide Linien (10,12) jeweils eine Länge aufweisen, die innerhalb des Längenbereichs der Linienlängengruppe liegt, wodurch eine weitere erste binäre Wasserzeicheninformation in das bzw. in die Vektorschriftzeichen eingebettet wird, oder
h) Verändern des Längenverhältnisses der beiden Linien (10,12) derart, dass die erste Linie (10) kürzer ist als die zweite Linie (12) und beide Linien (10,12) jeweils eine Länge aufweisen, die innerhalb des Längenbereichs der Linienlängengruppe liegt, wodurch eine weitere zweite binäre Wasserzeicheninformation in das bzw. in die Vektorschriftzeichen eingebettet wird.

8. Verfahren nach Anspruch 7, **dadurch gekennzeichnet, dass** zur Einbettung der ersten Wasserzeicheninformation die Breiten der beiden Linien (10,12) unverändert bleiben, wenn die erste Linie (10) breiter ist als die zweite Linie (12), und dass zur Einbettung der zweiten Wasserzeicheninformation die Breiten der beiden Linien (10,12) unverändert bleiben, wenn die erste Linie (10) schmaler ist als die zweite Linie (12).

9. Verfahren nach Anspruch 7, **dadurch gekennzeichnet, dass** zur Einbettung der ersten Wasserzeicheninformation die Veränderung des Breitenverhältnisses der beiden Linien (10,12) durch Vergrößern der Breite der ersten Linie (10) und/oder durch Verkleinern der Breite der zweiten Linie (12) erfolgt und dass zur Einbettung der zweiten Wasserzeicheninformation die Veränderung der Breite der beiden Linien (10,12) durch Verkleinern der Breite der ersten Linien (10) und/oder durch Vergrößern der Breite der zweiten Linie (12) erfolgt.

10. Verfahren nach Anspruch 7, **dadurch gekennzeichnet, dass** zur Einbettung der ersten Wasserzeicheninformation die Längen der beiden Linien (10,12) unverändert bleiben, wenn die erste Linie (10) länger ist als die zweite Linie (12), und dass zur Einbettung der zweiten Wasserzeicheninformation die Längen der beiden Linien (10,12) unverändert bleiben, wenn die erste Linie (10) kürzer ist als die zweite Linie (12).

11. Verfahren nach Anspruch 7, **dadurch gekennzeichnet, dass** zur Einbettung der ersten Wasserzeicheninformation die Veränderung des Längenverhältnisses der beiden Linien (10,12) durch Vergrößern der Länge der ersten Linie (10) und/oder durch Verkleinern der Länge der zweiten Linie (12) erfolgt und dass zur Einbettung der zweiten Wasserzeicheninformation die Veränderung der Länge der beiden Linien (10,12) durch Verkleinern der Länge der ersten Linien (10) und/oder durch Vergrößern der Länge der zweiten Linie (12) erfolgt.

## Claims

1. Method for embedding binary watermark information in vector font characters which are defined, inter alia, by lines each having a width, the lines of the vector font characters being divided into sets of line width of different width ranges each defined by a lower and an upper limit value, the method comprising the following steps:
a) randomly or pseudo-randomly selecting two lines (10, 12) of a vector font character or one line, respectively, of two vector font characters with widths belonging in a common set of line widths,
b) defining one line as a first line (10) and the other line as a second line (12), and
c) changing the width ratio of both lines such that the first line (10) is wider than the second line (12) and both lines (10, 12) each have a width that is within width range of the set of line widths, whereby a first binary watermark information is embedded into the vector font character or characters, or
d) changing the width ratio of both lines (10, 12) such that the first line (10) is narrower than the second line (12) and both lines (10, 12) have a width that is within the width range of the set of line widths, whereby a second binary watermark information is embedded into the vector font character or characters.

2. Method of claim 1, **characterized in that** for embedding the first watermark information, the widths of both lines (10, 12) remain unchanged if the first line (10) is wider than the second line (12), and that for embedding the second watermark information, the widths of both lines (10, 12) remain unchanged if the first line (10) is narrower than the second line (12).

3. Method of claim 1, **characterized in that** for embedding the first watermark information, the change of the width ratio of the two lines (10, 12) is effected by increasing the width of the first line (10) and/or by reducing the width of the second line (12), and that for embedding the second watermark information, the change of the width of both lines (10, 12) is effected by reducing the width of the first line (10) and/or by increasing the width of the second line (12).

4. Method for embedding binary watermark information in vector font characters which are defined, inter alia, by lines each having a length, the lines of the vector font characters being divided into sets of line length of different length ranges each defined by a lower and an upper limit value, the method comprising the following steps:
a) randomly or pseudo-randomly selecting two lines (10, 12) of a vector font character or one line, respectively, of two vector font characters with lengths belonging in a common set of line lengths,
b) defining one line as a first line (10) and the other line as a second line (12), and
c) changing the length ratio of both lines such that the first line (10) is wider than the second line (12) and both lines (10, 12) each have a length that is within length range of the set of line lengths, whereby a first binary watermark information is embedded into the vector font character or characters, or
d) changing the length ratio of both lines (10, 12) such that the first line (10) is narrower than the second line (12) and both lines (10, 12) have a length that is within the length range of the set of line lengths, whereby a second binary watermark information is embedded into the vector font character or characters.

5. Method of claim 4, **characterized in that** for embedding the first watermark information, the lengths of both lines (10, 12) remain unchanged if the first line (10) is longer than the second line (12), and that for embedding the second watermark information, the lengths of both lines (10, 12) remain unchanged if the first line (10) is shorter than the second line (12).

6. Method of claim 4, **characterized in that** for embedding the first watermark information, the change of the length ratio of the two lines (10, 12) is effected by increasing the length of the first line (10) and/or by reducing the length of the second line (12), and that for embedding the second watermark information, the change of the length of both lines (10, 12) is effected by reducing the length of the first line (10) and/or by increasing the length of the second line (12).

7. Method for embedding binary watermark information in vector font characters which are defined, inter alia, by lines each having a width, the lines of the vector font characters being divided into sets of line width of different width ranges each defined by a lower and an upper limit value, and into sets of line length of different length ranges each defined by a lower and an upper limit value, the method comprising the following steps:
a) randomly or pseudo-randomly selecting two lines (10, 12) of a vector font character or one line, respectively, of two vector font characters with widths belonging in a common set of line widths,
b) defining one line as a first line (10) and the other line as a second line (12), and
c) changing the width ratio of both lines such that the first line (10) is wider than the second line (12) and both lines (10, 12) each have a width that is within width range of the set of line widths, whereby a first binary watermark information is embedded into the vector font character or characters, or
d) changing the width ratio of both lines (10, 12) such that the first line (10) is narrower than the second line (12) and both lines (10, 12) have a width that is within the width range of the set of line widths, whereby a second binary watermark information is embedded into the vector font character or characters, or
e) randomly or pseudo-randomly selecting two lines (10, 12) of a vector font character or one line, respectively, of two vector font characters with lengths belonging in a common set of line lengths,
f) defining one line as a first line (10) and the other line as a second line (12), and
g) changing the length ratio of both lines such that the first line (10) is wider than the second line (12) and both lines (10, 12) each have a length that is within length range of the set of line lengths, whereby a first binary watermark information is embedded into the vector font character or characters, or
h) changing the length ratio of both lines (10, 12) such that the first line (10) is narrower than the second line (12) and both lines (10, 12) have a length that is within the length range of the set of line lengths, whereby a second binary watermark information is embedded into the vector font character or characters.

8. Method of claim 7, **characterized in that** for embedding the first watermark information, the widths of both lines (10, 12) remain unchanged if the first line (10) is wider than the second line (12), and that for embedding the second watermark information, the widths of both lines (10, 12) remain unchanged if the first line (10) is narrower than the second line (12).

9. Method of claim 7, **characterized in that** for embedding the first watermark information, the change of the width ratio of the two lines (10, 12) is effected by increasing the width of the first line (10) and/or by reducing the width of the second line (12), and that for embedding the second watermark information, the change of the width of both lines (10, 12) is effected by reducing the width of the first line (10) and/or by increasing the width of the second line (12).

10. Method of claim 7, **characterized in that** for embedding the first watermark information, the lengths of both lines (10, 12) remain unchanged if the first line (10) is longer than the second line (12), and that for embedding the second watermark information, the lengths of both lines (10, 12) remain unchanged if the first line (10) is shorter than the second line (12).

11. Method of claim 7, **characterized in that** for embedding the first watermark information, the change of the length ratio of the two lines (10, 12) is effected by increasing the length of the first line (10) and/or by reducing the length of the second line (12), and that for embedding the second watermark information, the change of the length of both lines (10, 12) is effected by reducing the length of the first line (10) and/or by increasing the length of the second line (12).

## Revendications

1. Procédé destiné à l'incorporation des informations de filigrane binaires dans des caractères vectorisés, définis, inter alia, par des lignes, chacune ayant une largeur, les lignes des caractères vectorisés étant divisées en groupes de largeurs de lignes couvrant des gammes de largeur respectivement définies par une valeur limite haute et une valeur limite basse, le procédé comprenant les étapes suivantes:
a) choisir d'une manière aléatoire ou pseudo-aléatoire deux lignes (10, 12) d'un caractère vectorisé ou une ligne de chacun de deux caractères vectorisés ayant des largeurs appartenant à un groupe de largeurs de lignes commun,
b) définir l'une des lignes comme première ligne (10) et l'autre ligne comme deuxième ligne (12), et
c) changer le rapport de largeur des deux lignes de sorte que la première ligne (10) est plus large que la deuxième ligne (12) et que chacune des deux lignes (10, 12) a une largeur qui se trouve dans la gamme de largeur du groupe de largeurs de lignes, moyennant quoi une première information de filigrane est incorporée dans le(s) caractère(s) vectorisé(s), ou
d) changer le rapport de largeur des deux lignes (10, 12) de sorte que la première ligne (10) est plus étroite que la deuxième ligne (12) et que chacune des deux lignes (10, 12) a une largeur qui se trouve dans la gamme de largeur du groupe de largeurs de lignes, moyennant quoi une deuxième information de filigrane est incorporée dans le(s) caractère(s) vectorisé(s).

2. Procédé selon la revendication 1, **caractérisé en ce que**, pour incorporer ladite première information de filigrane, les largeurs des deux lignes (10, 12) restent inchangées si la première ligne (10) est plus large que la deuxième ligne (12), et que, pour incorporer ladite deuxième information de filigrane, les largeurs des deux lignes (10, 12) restent inchangées si la première ligne (10) est plus étroite que la deuxième ligne (12).

3. Procédé selon la revendication 1, **caractérisé en ce que**, pour incorporer ladite première information de filigrane, le changement du rapport de largeur des deux lignes (10, 12) est effectué par un agrandissement de la largeur de la première ligne (10) et/ou par une réduction de la largeur de la deuxième ligne (12), et que, pour incorporer ladite première information de filigrane, le changement du rapport de largeur des deux lignes (10, 12) est effectué par une réduction de la largeur de la première ligne (10) et/ou par un agrandissement de la largeur de la deuxième ligne (12).

4. Procédé destiné à l'incorporation des informations de filigrane binaires dans des caractères vectorisés, définis, inter alia, par des lignes, chacune ayant une longueur, les lignes des caractères vectorisés étant divisées en groupes de longueurs de lignes couvrant des gammes de longueur respectivement définies par une valeur limite haute et une valeur limite basse, le procédé comprenant les étapes suivantes:
a) choisir d'une manière aléatoire ou pseudo-aléatoire deux lignes (10, 12) d'un caractère vectorisé ou une ligne de chacun de deux caractères vectorisés ayant des longueurs appartenant à un groupe de longueurs de lignes commun,
b) définir l'une des lignes comme première ligne (10) et l'autre ligne comme deuxième ligne (12), et
c) changer le rapport de longueur des deux lignes de sorte que la première ligne (10) est plus longue que la deuxième ligne (12) et que chacune des deux lignes (10, 12) a une longueur qui se trouve dans la gamme de longueur du groupe de longueurs de lignes, moyennant quoi une première information de filigrane est incorporée dans le(s) caractère(s) vectorisé(s), ou
d) changer le rapport de longueur des deux lignes (10, 12) de sorte que la première ligne (10) est plus courte que la deuxième ligne (12) et que chacune des deux lignes (10, 12) a une longueur qui se trouve dans la gamme de longueur du groupe de longueurs de lignes, moyennant quoi une deuxième information de filigrane est incorporée dans le(s) caractère(s) vectorisé(s).

5. Procédé selon la revendication 4, **caractérisé en ce que**, pour incorporer ladite première information de filigrane, les longueurs des deux lignes (10, 12) restent inchangées si la première ligne (10) est plus longue que la deuxième ligne (12), et que, pour incorporer ladite deuxième information de filigrane, les longueurs des deux lignes (10, 12) restent inchangées si la première ligne (10) est plus courte que la deuxième ligne (12).

6. Procédé selon la revendication 4, **caractérisé en ce que**, pour incorporer ladite première information de filigrane, le changement du rapport de longueur des deux lignes (10, 12) est effectué par un agrandissement de la longueur de la première ligne (10) et/ou par une réduction de la longueur de la deuxième ligne (12), et que, pour incorporer ladite première information de filigrane, le changement du rapport de longueur des deux lignes (10, 12) est effectué par une réduction de la longueur de la première ligne (10) et/ou par un agrandissement de la longueur de la deuxième ligne (12).

7. Procédé destiné à l'incorporation des informations de filigrane binaires dans des caractères vectorisés, définis, inter alia, par des lignes, chacune ayant une largeur, les lignes des caractères vectorisés étant divisées en groupes de largeurs de lignes couvrant des gammes de largeur respectivement définies par une valeur limite haute et une valeur limite basse et en groupes de longueurs de lignes couvrant des gammes de longueur respectivement définies par une valeur limite haute et une valeur limite basse, le procédé comprenant les étapes suivantes:
a) choisir d'une manière aléatoire ou pseudo-aléatoire deux lignes (10, 12) d'un caractère vectorisé ou une ligne de chacun de deux caractères vectorisés ayant des largeurs appartenant à un groupe de largeurs de lignes commun,
b) définir l'une des lignes comme première ligne (10) et l'autre ligne comme deuxième ligne (12), et
c) changer le rapport de largeur des deux lignes de sorte que la première ligne (10) est plus large que la deuxième ligne (12) et que chacune des deux lignes (10, 12) a une largeur qui se trouve dans la gamme de largeur du groupe de largeurs de lignes, moyennant quoi une première information de filigrane est incorporée dans le(s) caractère(s) vectorisé(s), ou
d) changer le rapport de largeur des deux lignes (10, 12) de sorte que la première ligne (10) est plus étroite que la deuxième ligne (12) et que chacune des deux lignes (10, 12) a une largeur qui se trouve dans la gamme de largeur du groupe de largeurs de lignes, moyennant quoi une deuxième information de filigrane est incorporée dans le(s) caractère(s) vectorisé(s), ou
e) choisir d'une manière aléatoire ou pseudo-aléatoire deux lignes (10, 12) d'un caractère vectorisé ou une ligne de chacun de deux caractères vectorisés ayant des longueurs appartenant à un groupe de longueurs de lignes commun,
f) définir l'une des lignes comme première ligne (10) et l'autre ligne comme deuxième ligne (12), et
g) changer le rapport de longueur des deux lignes de sorte que la première ligne (10) est plus longue que la deuxième ligne (12) et que chacune des deux lignes (10, 12) a une longueur qui se trouve dans la gamme de longueur du groupe de longueurs de lignes, moyennant quoi une première information de filigrane est incorporée dans le(s) caractère(s) vectorisé(s), ou
h) changer le rapport de longueur des deux lignes (10, 12) de sorte que la première ligne (10) est plus courte que la deuxième ligne (12) et que chacune des deux lignes (10, 12) a une longueur qui se trouve dans la gamme de longueur du groupe de longueurs de lignes, moyennant quoi une deuxième information de filigrane est incorporée dans le(s) caractère(s) vectorisé(s).

8. Procédé selon la revendication 7, **caractérisé en ce que**, pour incorporer ladite première information de filigrane, les largeurs des deux lignes (10, 12) restent inchangées si la première ligne (10) est plus large que la deuxième ligne (12), et que, pour incorporer ladite deuxième information de filigrane, les largeurs des deux lignes (10, 12) restent inchangées si la première ligne (10) est plus étroite que la deuxième ligne (12).

9. Procédé selon la revendication 7, **caractérisé en ce que**, pour incorporer ladite première information de filigrane, le changement du rapport de largeur des deux lignes (10, 12) est effectué par un agrandissement de la largeur de la première ligne (10) et/ou par une réduction de la largeur de la deuxième ligne (12), et que, pour incorporer ladite première information de filigrane, le changement du rapport de largeur des deux lignes (10, 12) est effectué par une réduction de la largeur de la première ligne (10) et/ou par un agrandissement de la largeur de la deuxième ligne (12).

10. Procédé selon la revendication 7, **caractérisé en ce que**, pour incorporer ladite première information de filigrane, les longueurs des deux lignes (10, 12) restent inchangées si la première ligne (10) est plus longue que la deuxième ligne (12), et que, pour incorporer ladite deuxième information de filigrane, les longueurs des deux lignes (10, 12) restent inchangées si la première ligne (10) est plus courte que la deuxième ligne (12).

11. Procédé selon la revendication 7, **caractérisé en ce que**, pour incorporer ladite première information de filigrane, le changement du rapport de longueur des deux lignes (10, 12) est effectué par un agrandissement de la longueur de la première ligne (10) et/ou par une réduction de la longueur de la deuxième ligne (12), et que, pour incorporer ladite première information de filigrane, le changement du rapport de longueur des deux lignes (10, 12) est effectué par une réduction de la longueur de la première ligne (10) et/ou par un agrandissement de la longueur de la deuxième ligne (12).
